# EUROPEAN PATENT SPECIFICATION

(11) **EP 4 228 061 B1**
(45) Date of publication and mention of the grant of the patent: **03.12.2025**
(21) Application number: 22858654.1
(22) Date of filing: 05.08.2022
(51) Int. Cl.: H01M 10/6567, H01M 10/6556, H01M 10/6551, H01M 10/613, H01M 10/48, H01M 50/249, H01M 10/625, H01M 10/647

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 17.08.2021 KR 20210107934
(43) Date of publication of application: 16.08.2023
(73) Proprietor: LG Energy Solution, Ltd., Seoul 07335 (KR)
(72) Inventor: JANG, Byung Do, Daejeon 34122 (KR); LEE, Hyoungsuk, Daejeon 34122 (KR); KIM, Donghyun, Daejeon 34122 (KR); SHIN, Juhwan, Daejeon 34122 (KR); CHUN, Yongho, Daejeon 34122 (KR)
(74) Representative: Plasseraud IP
(86) International application number: PCT/KR2022/011658
(87) International publication number: WO 2023/022416

(56) References cited:
- WO-A1-2021/221478
- CN-A- 109 962 191
- KR-A- 20170 130 902
- KR-A- 20180 053 418
- KR-A- 20200 021 608
- KR-A- 20200 142 240
- US-A1- 2020 365 850
- US-B2- 8 852 779

## Description

### [TECHNICAL FIELD]

The present disclosure relates to a battery pack and a device including the same, and more particularly, to a battery pack having enhanced cooling performance and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and may be placed under high-temperature conditions such as summer or desert areas.

Therefore, when configuring a battery module or battery pack, it may be very important to ensure stable and effective cooling performance. Particularly, in recent years, as the capacity of a battery module or battery pack increases, the amount of heat generation increases, wherein a water-cooled cooling structure rather than an air-cooled cooling structure is required to control the increased heat generation amount. In the case of a water-cooled cooling structure, cooling performance is excellent, but a sealed structure that prevents cooling water from leaking to electrical components inside a battery pack is essentially required.

As the demand for increased battery pack capacity and improved heat dissipation performance are consecutive, it may be practically necessary to develop a battery pack equipped with a stable sealed structure.

Examples of background art can be found in WO2021/221478A1 (published on 4 November 2021), US8852779B2,

US2020/365850A1, CN109962191A, KR20200021608A, KR20170130902A, KR20200142240A, and KR20180053418A.

### [DETAILED DESCRIPTION OF THE INVENTION]

### [Technical Problem]

It is an object of the present disclosure to provide a battery pack which is improved in sealing property to prevent coolant leakage in a water-cooled cooling structure, and a device including the same.

However, the problem to be solved by embodiments of the present disclosure is not limited to the above-described problems, and can be variously expanded within the scope of the technical idea included in the present disclosure.

### [Technical Solution]

According the independent claim 1, there is provided a battery pack comprising: a battery module including a plurality of battery cells; a pack frame that houses the battery module; a pack coolant pipe assembly that is connected to the battery module; and a pack coolant pipe housing that houses the pack coolant pipe assembly therein. The pack coolant pipe housing is in a shape where a lower part is opened, and the pack coolant pipe assembly is located between the pack coolant pipe housing and the pack frame.

The pack coolant pipe housing comprises a housing part in which the pack coolant pipe assembly is housed and the lower part is opened, and a fastening part that extends from the housing part and is fastened to the pack frame.

The battery pack further comprises a gasket that is located between the fastening part and the pack frame.

The fastening part may be fastened to the pack frame by bolt joining.

The battery module may comprise a battery cell stack in which the battery cells are stacked; a module frame that houses the battery cell stack; a heat sink that is located under the bottom part of the module frame; and cooling ports that supply a coolant to the heat sink or discharge the coolant from the heat sink.

The module frame may comprise a module frame protrusion that protrudes from a bottom part of the module frame, the cooling port may be located on the module frame protrusion; and the pack coolant pipe assembly may be connected to the cooling port.

The battery module may comprise a first battery module and a second battery module. The module frame protrusion of the first battery module may protrude toward the second battery module. The module frame protrusion of the second battery module may protrude toward the first battery module.

The pack coolant pipe assembly and the pack coolant pipe housing may be located between the first battery module and the second battery module, and the pack coolant pipe assembly may be connected to the cooling port through an opened lower part of the pack coolant pipe housing.

The bottom part of the module frame may constitute an upper plate of the heat sink, and the bottom part of the module frame may come into contact with the coolant.

The pack coolant pipe assembly may comprise a pack coolant pipe and a connection port that connects the pack coolant pipe and the cooling port.

The cooling port may be inserted therein and coupled to the lower side of the connection port, and a sealing member may be located between the cooling port and the connection port.

The battery pack may further comprise a drain valve that is formed in a region covered by the pack coolant pipe housing and has an openable and closable structure.

The drain valve may comprise a spacer in which a connection pipe is formed, and a drain plug inserted into the connection pipe.

The battery pack may further comprise a leak detection sensor that is housed in the pack coolant pipe housing.

### [Advantageous Effects]

According to embodiments of the present disclosure, cooling performance can be improved through the integrated cooling type structure in which the module frame and the heat sink are integrated. At this time, a cooling port is formed in each of the battery modules in the battery pack, so that uniform cooling performance can be exhibited in each battery module.

In addition, a pack coolant pipe assembly that transfers the coolant to the cooling port is housed in the pack coolant pipe housing, thereby being able to prevent leaked coolant from penetrating electric components inside the battery pack and causing fire or explosion.

Further, since the pack coolant pipe housing in a shape a lower part is opened is used, the number of required parts can be reduced, and the region requiring sealing can be reduced, thereby reducing the risk of coolant leakage.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery module according to one embodiment of the present disclosure;
Fig. 2 is an exploded perspective view of the battery module of Fig. 1;
Fig. 3 is a plan view of a battery cell included in the battery module of Fig. 2;
Fig. 4 is a view showing the battery module of Fig. 1 as viewed from below to above along the Z-axis direction;
Fig. 5 is an exploded perspective view showing a battery pack according to one embodiment of the present disclosure;
Fig. 6 is an exploded perspective view showing a battery pack according to one embodiment of the present disclosure excluding a pack coolant pipe housing;
Fig. 7 is a perspective view showing a pack coolant pipe assembly, a pack coolant pipe housing, and a gasket according to one embodiment of the present disclosure;
Fig. 8 is a partial perspective view showing portions of each of a battery module, a pack coolant pipe assembly, and a pack coolant pipe housing according to one embodiment of the present disclosure;
Fig. 9 is a partial view showing a connection port and a cooling port according to one embodiment of the present disclosure;
Fig. 10 is a perspective view showing a pack coolant pipe housing according to one embodiment of the present disclosure;
Fig. 11 is a perspective view showing a state in which the opened lower part of the pack coolant pipe housing of Fig. 10 is turned upside down;
Fig. 12 is a partial cross-sectional view showing a portion of a cross section cut along the cutting line A-A' of Fig. 5;
(a) and (b) of Fig. 13 are partial views of the area indicated by "B" in Fig. 12 as viewed at different angles; and
Fig. 14 is a perspective view showing a pack coolant pipe assembly, a pack coolant pipe housing, and a pack coolant pipe cover according to a comparative example of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein. Nevertheless, the invention is defined solely by the scope of the appended claims.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

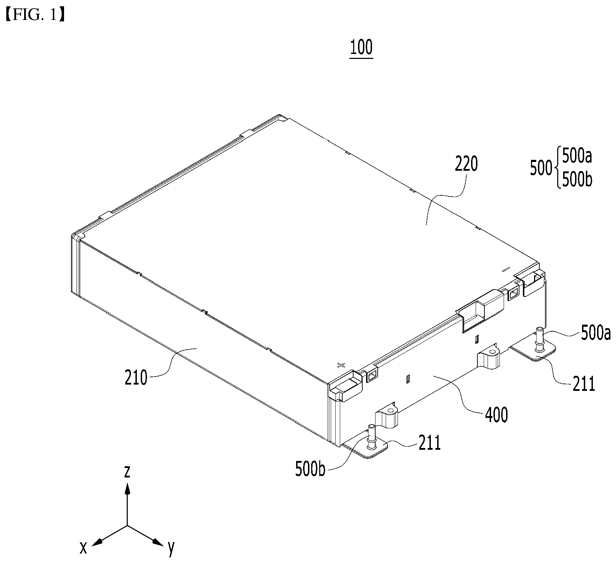

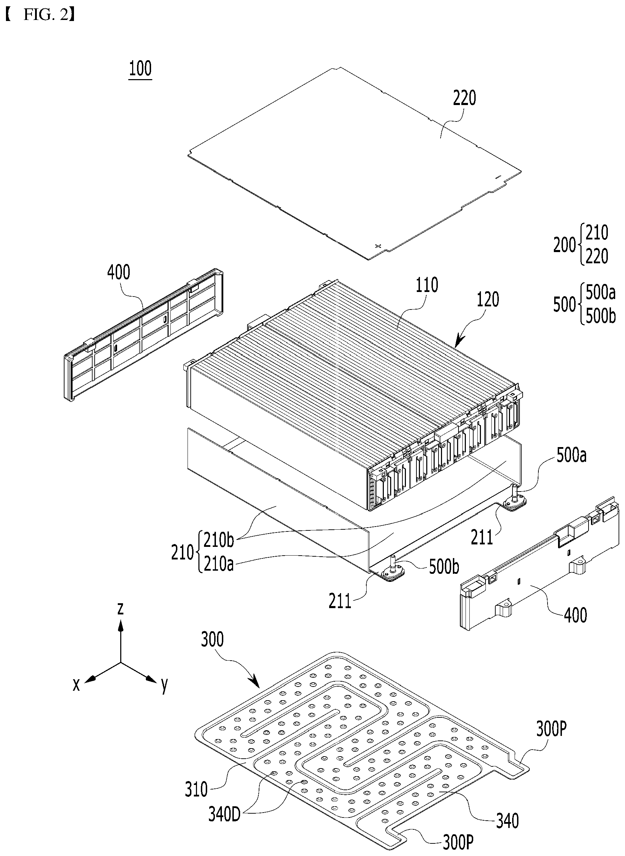

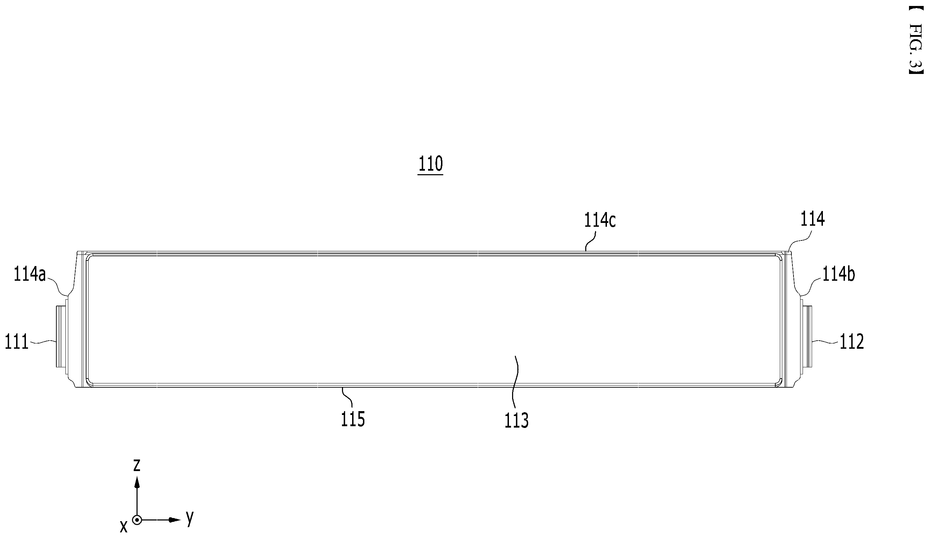

Fig. 1 is a perspective view showing a battery module according to one embodiment of the present disclosure. Fig. 2 is an exploded perspective view of the battery module of Fig. 1. Fig. 3 is a plan view of a battery cell included in the battery module of Fig. 2.

Referring to Figs. 1 to 3, the battery module 100 according to one embodiment of the present disclosure includes a plurality of battery cells 110. Specifically, the battery module 100 may include a battery cell stack 120 in which battery cells 110 are stacked and a module frame 200 that houses the battery cell stack 120.

First, the battery cell 110 may be a pouch-type battery cell. Such a pouch-type battery cell may be formed by housing an electrode assembly in a pouch case of a laminated sheet including a resin layer and a metal layer, and then fusing the outer peripheral part of the pouch case. At this time, the battery cells 110 may be formed in a rectangular sheet-like structure as shown in Fig. 3.

Specifically, the battery cell 110 according to the present embodiment has a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to one embodiment of the present disclosure has a total of three sealing parts, wherein the sealing parts have a structure that is sealed by a method such as heat-sealing, and the remaining other side part may be composed of a connection part 115. A direction parallel to both ends 114a and 114b of the battery case 114 may be defined as a width direction of the battery cell 110, and a direction parallel to one side part 114c connecting both ends 114a and 114b of the battery case 114 and the connection part 115 may be defined as a length direction of the battery cell 110.

Meanwhile, only the battery cell 110 having a structure in which the electrode leads 111 and 112 protrudes in both directions of one side and the other side has been described, but in another embodiment of the present disclosure, it goes without saying that a unidirectional pouch-type battery cell in which the electrode leads protrude together in one direction is available.

The battery cell 110 may be composed by a plurality of numbers, and the plurality of battery cells 110 may be stacked so as to be electrically connected to each other, thereby forming a battery cell stack 120. Particularly, as shown in Fig. 2, a plurality of battery cells 110 may be stacked along the direction parallel to the x-axis. The battery cell case 114 is generally formed in a laminated structure of resin layer/metal thin film layer/resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the battery case to form a battery cell stack 120.

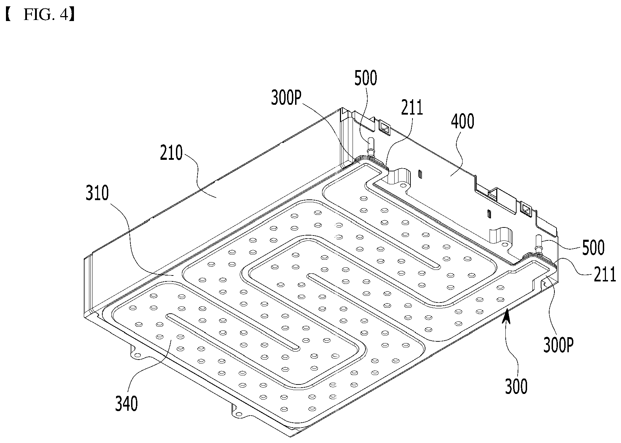

Fig. 4 is a view showing the battery module of Fig. 1 as viewed from below to above along the Z-axis direction.

Referring to Figs. 1, 2 and 4, the module frame 200 that houses the battery cell stack 120 may include a U-shaped frame 210 and an upper cover 220.

The U-shaped frame 210 may include a bottom part 210a and two side surface parts 210b extending upward at both ends of the bottom part 210a. The bottom part 210a may cover the lower surface of the battery cell stack 120, and the side surface part 210b may cover both side surfaces of the battery cell stack 120.

The upper cover 220 may be formed in a single plate-shaped structure that wraps the lower surface wrapped by the U-shaped frame 210 and the remaining upper surface (z-axis direction) excluding the both side surfaces. The upper cover 220 and the U-shaped frame 210 can be joined by welding or the like in a state in which the corresponding corner portions are in contact with each other, thereby forming a structure that covers the battery cell stack 120 vertically and horizontally. The battery cell stack 120 can be physically protected through the upper cover 220 and the U-shaped frame 210. For this purpose, the upper cover 220 and the U-shaped frame 210 may include a metal material having a predetermined strength.

Meanwhile, although not specifically shown in the figure, the module frame according to another embodiment of the present disclosure may be a mono frame in the form of a metal plate in which the upper surface, the lower surface, and both side surfaces are integrated. That is, this is not a structure in which the U-shaped frame 210 and the upper cover 220 are coupled with each other, but a structure in which the upper surface, the lower surface, and both side surfaces are integrated by being manufactured by extrusion molding.

The end plates 400 may be formed so that they are located on opened both sides of the module frame 200 opposing to each other so as to cover the battery cell stack 120. Such an end plate 400 can physically protect the battery cell stack 120 and other electrical components from external impact.

Meanwhile, although not specifically shown in the figure, a busbar frame to which a busbar is mounted and an insulating cover for electrical insulation may be located between the battery cell stack 120 and the end plate 400.

The battery module 100 according to the present embodiment may further include a heat sink 300 that is located under the bottom part 210a of the module frame 200. The bottom part 210a of the module frame 200 constitutes an upper plate of the heat sink 300, and the recessed part 340 of the heat sink 300 and the bottom part 210a of the module frame 200 may form a coolant flow path. Further, the battery module 100 may include cooling ports 500 that supply a coolant to the heat sink 300 or discharge the coolant from the heat sink.

Specifically, the module frame according to the present embodiment may comprise a module frame protrusion 211 that protrudes from the bottom part of the module frame 200 so as to protrude to the outer side of end plate 400. At this time, the coolant may be supplied to or discharged from the heat sink 300 by the cooling port 500 located on the module frame protrusion 211. A pack coolant pipe assembly described later can be connected to the cooling port 500.

The cooling port 500 may include a coolant injection port 500a that supplies a coolant to the heat sink 300 and a coolant discharge port 500b that discharges the coolant from the heat sink 300. The coolant injection port 500a and the coolant discharge port 500b may be connected to a pack coolant supply pipe and a pack coolant discharge pipe, which will be described later. The module frame protrusion 211 may include a first module frame protrusion and a second module frame protrusion that are located apart from each other at one side of the module frame 200, the coolant injection port 500a may be arranged on the first module frame protrusion, and the coolant discharge port 500b may be arranged on the second module frame protrusion.

Next, the heat sink according to the present embodiment will be described in detail. As described above, the bottom part 210a of the module frame 200 constitutes an upper plate of the heat sink 300, and the recessed part 340 of the heat sink 300 and the bottom part 210a of the module frame 200 may correspond to a flow path through which coolant flows.

Specifically, the heat sink 300 may be formed at a lower part of the module frame 200. The heat sink 300 may include a lower plate 310 that forms the skeleton of the heat sink 300 and is directly joined to the bottom part 210a of the module frame 200 by welding or the like, and a recessed part 340 which is a path through which coolant flows. In addition, the heat sink 300 may include heat sink protrusions 300P that protrude from one side of the heat sink 300 to a portion where the module frame protrusion 211 is located. That is, the recessed part 340 may connect the two heat sink protrusions 300P, wherein the two heat sink protrusions 300P may be a portion through which the coolant flows in and a portion through which the coolant is discharged, respectively. For this purpose, the heat sink protrusion 300P may be located so as to correspond to the module frame protrusion 211 on which the cooling port 500 is formed.

The heat sink protrusion 300P and the module frame protrusion 211 may be directly joined to each other by welding or the like.

The recessed part 340 of the heat sink 300 corresponds to a portion in which the lower plate 310 is formed to be recessed downward. The recessed part 340 may be a pipe having a U-shaped cross section cut along an xz plane or an yz plane perpendicular to the direction in which the coolant flow path extends, and the bottom part 210a may be located on the opened upper side of the U-shaped pipe. While the lower plate 310 of the heat sink 300 being in contact with the bottom part 210a, the space between the recessed part 340 and the bottom part 210a becomes an area in which the coolant flows, that is, a flow path for the coolant. Thereby, the bottom part 210a of the module frame 200 can come into direct contact with the coolant.

The method for preparing the recessed part 340 of the heat sink 300 is not particularly limited, but the U-shaped recessed part 340 having an opened upper side can be formed by providing a structure in which the plate-shaped heat sink 300 is formed to be recessed.

The recessed part 340 may extend from one of the heat sink protrusions 300P to the other as described above. The coolant supplied through the coolant injection port 500a passes between the module frame protrusion 211 and the heat sink protrusion 300P and first flows into the space between the recessed part 340 and the bottom part 210a. After that, the coolant moves along the recessed part 340, passes between the other module frame protrusion 211 and the other heat sink protrusion 300P and is discharged through the coolant discharge port 500b.

Meanwhile, although not shown in the figure, a thermal conductive resin layer including a thermal conductive resin may be located between the bottom part 210a of the module frame 200 and the battery cell stack 120 in Fig. 2. The thermal conductive resin layer can be formed by applying a thermal conductive resin to the bottom part 210a and then curing the applied thermal conductive resin.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing one or more battery cells 110 constituting the battery cell stack 120. Further, since the thermal conductive resin has excellent heat transfer properties, it is possible to quickly transfer the heat generated in the battery module 110 to the lower-side.

The battery module 100 according to the present embodiment realizes an integrated cooling type structure of the module frame 200 and the heat sink 300 and thus, can further improve the cooling performance. The bottom part 210a of the module frame 200 corresponds to the upper plate of the heat sink 300, thereby capable of realizing an integrated cooling type structure. The cooling efficiency increases due to direct cooling, and through a structure in which the heat sink 300 is integrated with the bottom part 210a of the module frame 200, the space utilization rate of the battery module 100 and the battery pack 1000 to which the battery module 100 is mounted can be further improved.

Specifically, heat generated from the battery cell 110 can pass through a thermal conductive resin layer (not shown) located between the battery cell stack 120 and the bottom part 210a, the bottom part 210a of the module frame 200 and the coolant, and then can be transferred to the outside of the battery module 100. By removing the unnecessary cooling structure according to the conventional one, the heat transfer path can be simplified and an air gap between respective layers can be reduced, so that the cooling efficiency or performance can be enhanced. Particularly, since the bottom part 210a is composed of an upper plate of the heat sink 300, and the bottom part 210a directly contacts the coolant, which is thus advantageous in that more direct cooling through the coolant is possible.

Further, through the removal of the unnecessary cooling structure, the height of the battery module 100 is reduced and thus, the cost can be reduced and the space utilization rate can be increased. Furthermore, since the battery module 100 can be arranged in a compact manner, the capacity or output of the battery pack including a plurality of battery modules 100 can be increased.

Meanwhile, the bottom part 210a of the module frame 200 may be weld-joined to the lower plate 310 portion where the recessed part 324 is not formed in the heat sink 300. In the present embodiment, the integrated cooling type structure of the bottom part 210a of the module frame 200 and the heat sink 300 not only improves the above-mentioned cooling performance but also can have the effect of supporting the load of the battery cell stack 120 housed in the module frame 200 and reinforcing the stiffness of the battery module 100. In addition, the lower plate 310 and the bottom part 210a of the module frame 200 are sealed through a welding junction, and the like, so that in the recessed part 340 formed inside the lower plate 310, the coolant can flow without leakage.

For effective cooling, as shown in Fig. 4, the recessed part 340 are preferably formed over the entire area corresponding to the bottom part 210a of the module frame 200 as shown in Fig. 4. For this purpose, the recessed part 340 may be bent at least once to extend from one side to the other. Particularly, in order for the recessed part 340 to form over the entire area corresponding to the bottom part 210a of the module frame 200, the recessed part 340 is preferably bent several times. As the coolant moves from the start point to the end point of the coolant flow path formed over the entire region corresponding to the bottom part 210a of the module frame 200, efficient cooling can be performed over the entire region of the battery cell stack 120.

Meanwhile, the coolant is a medium for cooling, and is not particularly limited, but may be cooling water. That is, the battery pack 1000 according to the present embodiment may have a water-cooled type cooling structure.

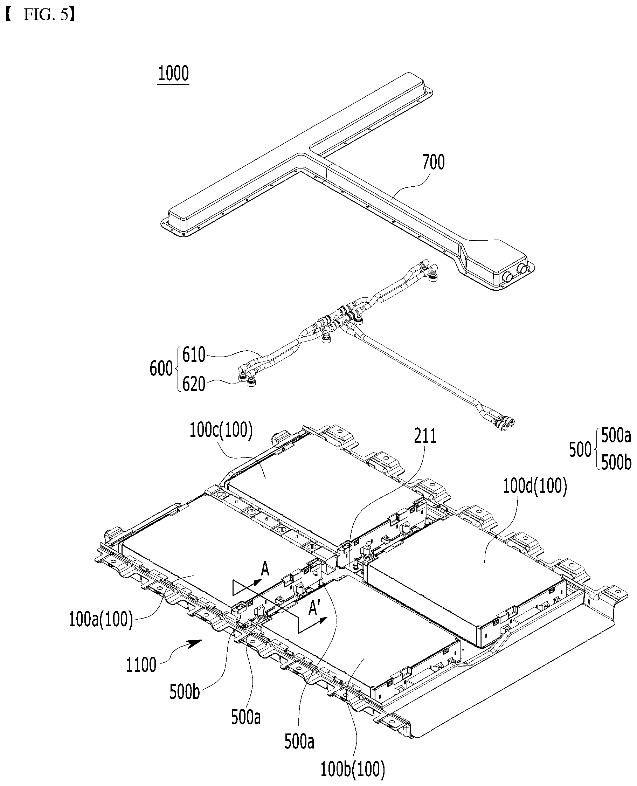

Next, a battery pack according to one embodiment of the present disclosure will be described in detail with reference to Figs. 5 to 7.

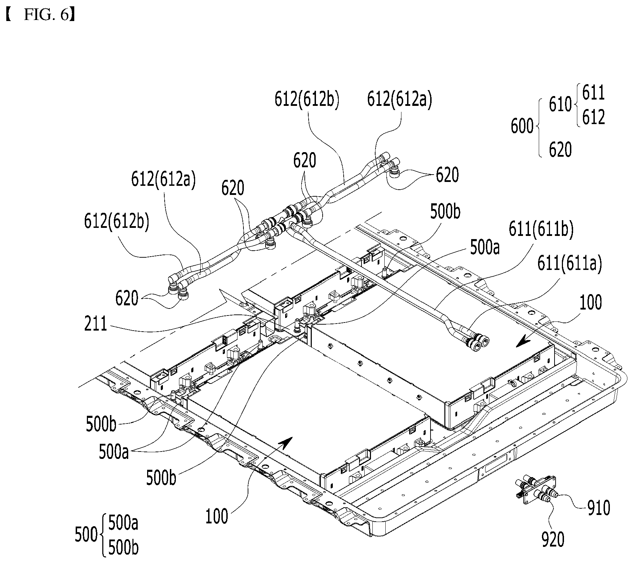

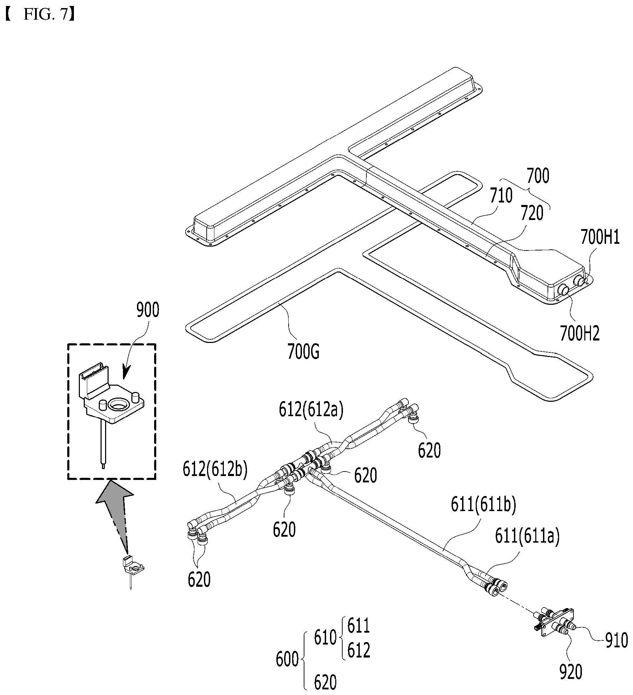

Fig. 5 is an exploded perspective view showing a battery pack according to one embodiment of the present disclosure. Fig. 6 is an exploded perspective view showing a battery pack according to one embodiment of the present disclosure excluding a pack coolant pipe housing. Fig. 7 is a perspective view showing a pack coolant pipe assembly, a pack coolant pipe housing, and a gasket according to one embodiment of the present disclosure.

Referring to Figs. 5 to 7, the battery pack 1000 according to one embodiment of the present disclosure includes a battery module 100; a pack frame 1100 that houses the battery module 100; a pack coolant pipe assembly 600 that is connected to the battery module 100; and a pack coolant pipe housing 700 that houses the pack coolant pipe assembly 600 therein. The pack coolant pipe housing 700 has a shape in which the lower part is opened. The battery module 100 previously described in Figs. 1 to 4 may be housed in the pack frame 1100.

The number of battery modules 100 included in the battery pack 1000 is not particularly limited. One battery module may be arranged, and a plurality of battery modules may be arranged. As an example, as shown in Figs. 5 and 6, four battery modules 100 may be arranged in a lattice form. The plurality of battery modules 100 are arranged in two rows in the direction in which the battery cells 110 are stacked, and may include a first battery module 100a and a second battery module 100b that face each other in a direction perpendicular to the direction in which the battery cells 110 are stacked. Further, in the direction in which the battery cells 110 are stacked, a third battery module 100c may be located next to the first battery module 100a, and a fourth battery module 100d may be located next to the second battery module 100b.

In the present embodiment, the pack coolant pipe assembly 600 may be connected to the cooling ports 500 of the battery module 100. Further, the pack coolant pipe assembly 600 may be arranged between the battery modules 100 adjacent to each other. In the space between the battery modules 100 adjacent to each other in which the pack coolant pipe assembly 600 is arranged, all of the cooling ports 500 formed in each of the battery modules 100 adjacent to each other can be arranged as shown in Figs. 5 and 6. Specifically, referring to Figs. 1, 5 and 6 together, the module frame protrusion 211 of the first battery module 100a may protrude toward the second battery module 100b, and the module frame protrusion 211 of the second battery module 100b may protrude toward the first battery module 100a. That is, both the cooling ports 500 of the first battery module 100a and the cooling ports 500 of the second battery module 100b may be located between the first battery module 100a and the second battery module 100b. Thereby, a portion of the pack coolant pipe assembly 600 connected to the cooling ports 500 may be located between the first battery module 100a and the second battery module 100b. Further, a portion of the pack coolant pipe housing 700 that houses the pack coolant pipe assembly 600 may also be located between the first battery module 100a and the second battery module 100b. The pack coolant pipe assembly 600 may be connected to the cooling ports 500 through an opened bottom part of the pack coolant pipe housing 700. The connection structure between the pack coolant pipe assembly 600 and the cooling port 500 and the structure of the pack coolant pipe housing 700 will be described again below.

Meanwhile, the coolant injection port 500a formed in one of the battery modules 100 adjacent to each other and the coolant discharge port 500b formed in the other battery module 100 may be arranged facing each other. In one example, the coolant injection port 500a of the first battery module 100a and the coolant discharge port 500b of the second battery module 100b may be arranged to face each other.

The pack coolant pipe assembly 600 may include a pack coolant pipe 610 and a connection port 620 for connecting the pack coolant pipe 610 and the cooling port 500.

The pack coolant pipe 610 may include a main pack coolant pipe 611 that is connected to an inlet 910 and an outlet 920 and a sub-pack coolant pipe 612 that connects between the main pack coolant pipe 611 and the battery module 100. The sub-pack coolant pipe 612 may each extend in both directions perpendicular to the longitudinal direction of the main pack coolant pipe 611 at one end of the main pack coolant pipe 611.

In particular, the sub-pack coolant pipe 612 may be connected to the cooling ports 500 of the battery module 100 through the connection port 620. Further, the sub-pack coolant pipes 612 may extend while crossing each other. One of the crossed sub-pack coolant pipes 612 may be a sub-pack coolant supply pipe 612a, and the other may be a sub-pack coolant discharge pipe 612b.

Since the pack coolant pipe 610 according to the present embodiment has the arrangement structure as described above, it is possible to realize an integrated cooling type structure with the battery module 100 within the battery pack 1000. Thereby, it is possible to increase the space utilization rate and simultaneously improve the cooling efficiency. The height of the crossed sub-pack coolant supply pipe 612a and the height of the sub-pack coolant discharge pipe 612b may be different from each other so as to have the arrangement structure of the pack coolant pipe 610 as described above. The portion where the height of the sub-pack coolant supply pipe 612a and the height of the sub-pack coolant discharge pipe 612b are different may be a part thereof.

Meanwhile, the main pack coolant pipe 611 may include a main pack coolant supply pipe 611a and a main pack coolant discharge pipe 611b. The main pack coolant supply pipe 611a may be connected to the sub-pack coolant supply pipe 612a, and the main pack coolant discharge pipe 611b may be connected to the sub-pack coolant discharge pipe 612b.

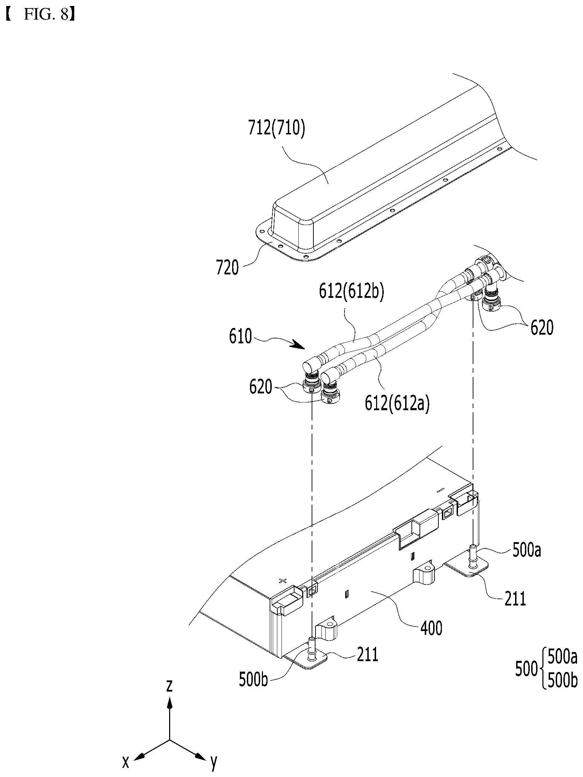

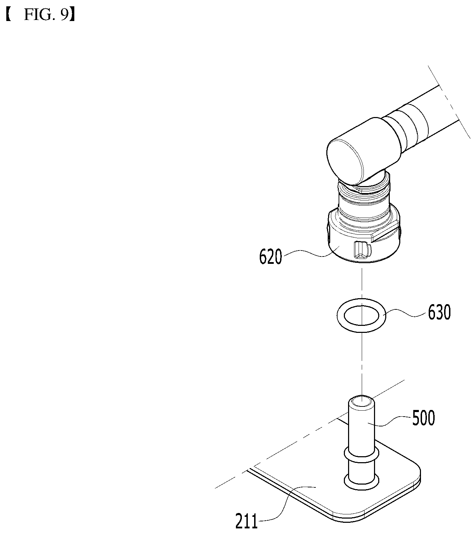

Fig. 8 is a partial perspective view showing portions of each of a battery module, a pack coolant pipe assembly, and a pack coolant pipe housing according to one embodiment of the present disclosure. Fig. 9 is a partial view showing a connection port and a cooling port according to one embodiment of the present disclosure.

Referring to Figs. 5 to 9 together, the connection port 620 may connect the cooling port 500 and the pack coolant pipe 610. As described above, the cooling port 500 may include a coolant injection port 500a and a coolant discharge port 500b, and the pack coolant pipe 610 may include a sub-pack coolant supply pipe 612a and a sub-pack coolant discharge pipe 612b.

At this time, any one connection port 620 may connect the coolant injection port 500a and the sub-pack coolant supply pipe 612a. Also, another connection port 620 may connect the coolant discharge port 500b and the sub-pack coolant discharge pipe 612b. That is, the connection port 620 is connected to each of the coolant injection ports 500a that supply coolant to the plurality of battery modules 100, and each of the coolant discharge ports 500b that discharge the coolant from the plurality of battery modules 100.

Taken together with the structure of the heat sink 300 described above, the coolant passes through the inlet 910, the main pack coolant supply pipe 611a, the sub-pack coolant supply pipe 612a, the connection port 620, and the coolant injection port 500a in order, and flows into the heat sink 300 of the battery module 100. The coolant flowing along the heat sink 300 cools the heat generated from the battery module 100. After that, the coolant passes through the coolant discharge port 500b, the connection port 620, the sub-pack coolant discharge pipe 612b, the main pack coolant discharge pipe 611b and the outlet 920 in order, and is discharged to the outside of the battery pack 1000. As described above, the coolant circulation structure of the battery pack 1000 according to the present embodiment can be provided.

The sub-pack coolant pipe 612 may be located between the first battery module 100a and the second battery module 100b and between the third battery module 100c and the fourth battery module 100d. Further, the sub-pack coolant pipe 612 may be connected to the cooling ports 500 of each of the first to fourth battery modules 100a, 100b, 100c, and 100d. The main pack coolant pipe 611 may be located between the second battery module 100b and the fourth battery module 100d.

Meanwhile, a connection method between the connection port 620 and the cooling port 500 is not particularly limited. As an example, as shown in Fig. 9, the cooling port 500 may be inserted therein and coupled to the lower side of the connection port 620. A lower end of the connection port 620 may come into contact with an upper surface part of the module frame protrusion 211. That is, the cooling port 500 and the connection port 620 may be coupled in a shape in which the cooling port 500 is inserted into the connection port 620.

A sealing member 630 may be located between the cooling port 500 and the connection port 620. The sealing member 630 may have an O-ring shape, and may be inserted between the cooling port 500 and the connection port 620. While the sealing member 630 being inserted into the cooling port 500, it may be inserted into the connection port 620 together with the cooling port 500. The sealing member 630 can prevent the coolant from leaking through a gap between the cooling port 500 and the connection port 620.

Next, the pack coolant pipe housing according to the present embodiment will be described in detail with reference to Figs. 5, 7, 8, and 10 to 12.

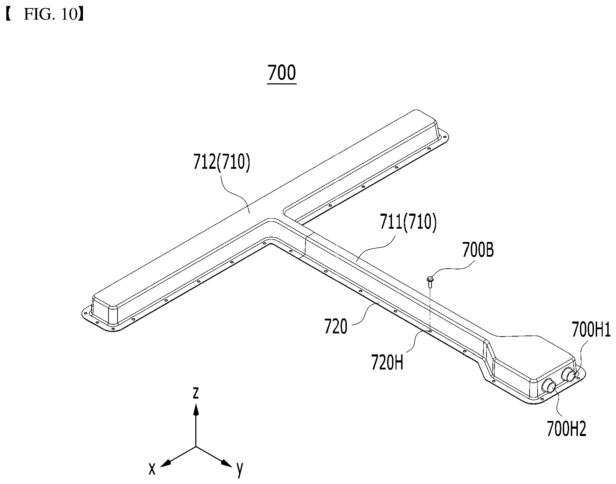

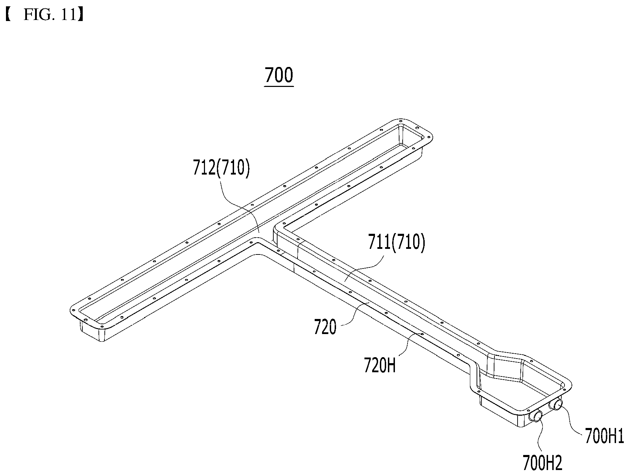

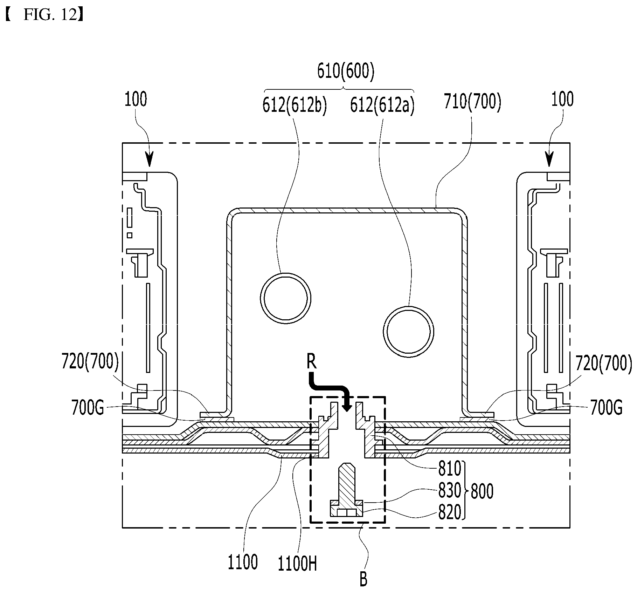

Fig. 10 is a perspective view showing a pack coolant pipe housing according to one embodiment of the present disclosure. Fig. 11 is a perspective view showing a state in which the opened lower part of the pack coolant pipe housing of Fig. 10 is turned upside down. Fig. 12 is a partial cross-sectional view showing a portion of a cross section cut along the cutting line A-A' of Fig. 5. Particularly, Fig. 12 is a cross-sectional view which shows assuming that the pack coolant pipe housing 700 and the pack coolant pipe assembly 600 are arranged between the battery modules 100 in Fig. 5.

Referring to Figs. 5, 7, 8 and 10 to 12, the battery pack 1000 according to the present embodiment includes a pack coolant pipe housing 700 that houses the pack coolant pipe assembly 600 therein. The pack coolant pipe housing 700 is in a shape in which the lower part is opened. That is, the pack coolant pipe housing 700 may be configured such that a lower part is opened and an upper surface part and a side surface part are closed.

The pack coolant pipe assembly 600 is located between the pack coolant pipe housing 700 and the pack frame 1100. The pack coolant pipe housing 700 may extend along the extended portions of the main pack coolant pipe 611 and the sub-pack coolant pipe 612.

Specifically, the pack coolant pipe housing 700 includes a housing part 710 that houses the pack coolant pipe assembly 600 and is opened in its lower part, and a fastening part 720 that extends from the housing part 710 and is fastened to the pack frame 1100. That is, the housing part 710 may be configured to connect to the side surface part and the upper surface part, and the fastening part 720 may be configured to extend side by side on one surface of the pack frame 1100.

The fastening part 720 may be fastened to the pack frame 1100 through bolt coupling. Specifically, a fastening hole 720H may be formed in the fastening part 720, and the bolt 700B passes through the fastening hole 720H and is fastened to the pack frame 1100, so that the fastening part 720 can be coupled to the pack frame 1100. Thereby, the pack coolant pipe assembly 600 may be sealed between the pack coolant pipe housing 700 and the pack frame 1100. Although not specifically shown in the figure, a hole corresponding to the fastening hole 720H may be formed in the gasket 700G so that the bolt 700B can pass therethrough.

At this time, the battery pack 1000 further includes a gasket 700G that is located between the fastening part 720 and the pack frame 1100. By providing the gasket 700G, it is possible to prevent the coolant from leaking through a gap between the fastening part 720 of the pack coolant pipe housing 700 and the pack frame 1100.

As described above, the pack coolant pipe assembly 600 may include a main pack coolant pipe 611 and a sub-pack coolant pipe 612, and the housing part 710 of the pack coolant pipe housing 700 according to the present embodiment may include a first housing part 711 that houses the main pack coolant pipe 611 and a second housing part 712 that houses the sub-pack coolant pipe 612.

Further, as described above, the main pack coolant pipe 611 may be connected to the inlet 910 and the outlet 920. At this time, the pack coolant pipe housing 700 may include an inlet hole 700H1 and an outlet hole 700H2 formed at locations corresponding to the inlet 910 and the outlet 920, respectively. That is, the inlet 910 passes through the inlet hole 700H1 and is connected to the main pack coolant supply pipe 611a, and the outlet 920 may pass through the outlet hole 700H2 and is connected to the main pack coolant discharge pipe 611b. Although not specifically shown in the figure, the inlet 910 and the outlet 920 may be connected to an external coolant circulation system.

In the present embodiment, the battery pack 1000 having the pack coolant pipe assembly 600 can be applied to vehicle means such as electric vehicles and hybrid vehicles, but a situation may occur in which coolant such as cooling water may leak due to an assembly failure or an accident during operation. The leaked coolant penetrates into a plurality of parts constituting the battery pack 1000, which may cause a fire or explosion. Thus, the pack coolant pipe assembly 600 is configured so as to be sealed between the pack coolant pipe housing 700 and the pack frame 1100, whereby even if the coolant leaks from the pack coolant pipe assembly 600, it is remained inside the pack coolant pipe housing 700. This is, it is possible to prevent a phenomenon in which the coolant leaking from the pack coolant pipe assembly 600 permeates other parts in the battery pack 1000. At this time, it is preferable that the space between the plurality of battery modules 100 is utilized so that the pack coolant pipe housing 700 can house the leaked coolant to a maximum extent, thereby maximally ensuring the volume of the pack coolant pipe housing 700.

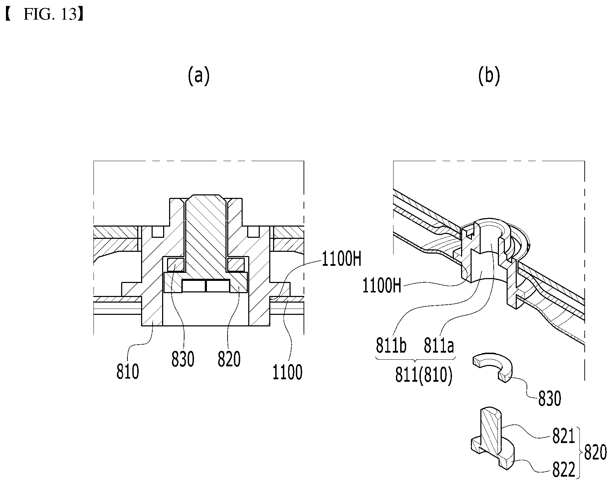

Next, a drain valve according to a modified embodiment of the present disclosure will now be described in detail with reference to Figs. 12 and 13.

(a) and (b) of Fig. 13 are partial views of the area indicated by "B" in Fig. 12 as viewed at different angles.

Referring to Fig. 12 and (a) and (b) of Fig. 13, the battery pack 1000 according to a modified embodiment of the present disclosure may further include a drain valve 800 having an openable and closable structure. The drain valve 800 may be formed in a region covered by the pack coolant pipe housing 700. A discharge port 1100H may be formed in the pack frame 1100, and a drain valve 800 may be located at the discharge port 1100H.

The drain valve 800 may include a spacer 810 in which a connection pipe 811 is formed, and a drain plug 820 that is inserted into connection pipe 811. Through the configuration of the spacer 810 and the drain plug 820, the drain valve 800 may form an openable and closable structure.

Specifically, the connection pipe 811 of the spacer 810 may include a first connection pipe 811a and a second connection pipe 811b, and the inner diameter of the first connection pipe 811a may be smaller than that of the second connection pipe 811b. The drain plug 820 may include an insertion part 821 having a diameter corresponding to the inner diameter of the first connection pipe 811a and a fixing part 822 having a diameter corresponding to the inner diameter of the second connection pipe 811b.

The insertion part 821 of the drain plug 820 can be inserted into the first connection pipe 811a of the spacer 810 to close the drain valve 800. The fixing part 822 is caught without being inserted into the first connection pipe 811a, thereby being able to prevent the drain plug 820 from entering the inner space of the pack coolant pipe housing 700.

The drain valve 800 may further include a sealing ring 830 that is located between the spacer 810 and the drain plug 820. Specifically, the sealing ring 830 is inserted into the insertion part 821, and then may be located between the step formed by the first connection pipe 811a and the second connection pipe 811b and the fixing part 822. By providing the sealing ring 830, while the insertion part 821 being inserted into the first connecting pipe 811a, it is possible to prevent the coolant from leaking through the gap therebetween.

If the coolant (R) leaks from the pack coolant pipe assembly 600, the coolant R is collected on the bottom surface of the pack frame 1100 inside the pack coolant pipe housing 700. At this time, the drain plug 820 can be removed from the connection pipe 811 to discharge the leaked coolant R to the outside of the pack frame 1100. Particularly, referring to Fig. 7, the battery pack 1000 according to the present embodiment may further include a leak detection sensor 900 housed in the pack coolant pipe housing 700. Particularly, the leak detection sensor 900 extends from the inner space of the pack coolant pipe housing 700 to the bottom surface of the pack frame 1100, and can detect the coolant R collected on the bottom surface of the pack frame 1100. When coolant leaks from the pack coolant pipe assembly 600, the leaked coolant R is collected on the bottom surface of the pack frame 1100. The leak detection sensor 900 may detect the leaked coolant R and send a signal. In accordance with this signal, the drain plug 820 is pulled out from the spacer 810, and the coolant R can be discharged to the outside of the pack frame 1100. That is, according to the present embodiment, while the coolant leaking from the pack coolant pipe assembly 600 through the pack coolant pipe housing 700 is prevented from penetrating into other components in the battery pack 1000, the coolant leaked through the drain valve 800 and the leak detection sensor 900 may be discharged to the outside of the battery pack 1000 according to circumstances. Through the process described above, it is possible to prevent leakage of the coolant from causing fire or explosion of the battery pack 1000 .

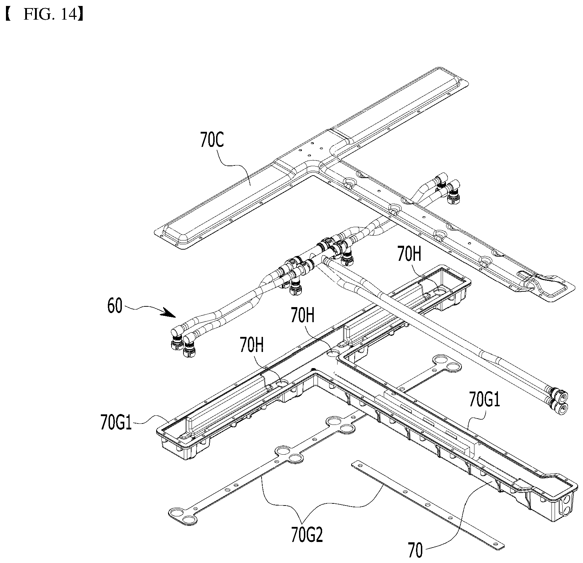

Next, the advantages of the pack coolant pipe housing of the present disclosure will be described in detail in comparison with the pack coolant pipe housing and the pack coolant pipe cover according to the comparative example of the present disclosure shown in Fig. 14.

Fig. 14 is a perspective view showing a pack coolant pipe assembly, a pack coolant pipe housing, and a pack coolant pipe cover according to a comparative example of the present disclosure.

Referring to Fig. 14, the pack coolant pipe assembly 60 is housed between the pack coolant pipe housing 70 and the pack coolant pipe cover 70C according to the comparative example of the present disclosure. Specifically, the pack coolant piper housing 70 may be opened in its upper part, and a pack coolant pipe cover 70C may cover the opened upper part of the pack coolant pipe housing 70.

In order to prevent leakage of the coolant, a first gasket 70G1 is preferably located between the pack coolant pipe housing 70 and the pack coolant pipe cover 70C. Further, a through hole 70H may be formed in the lower surface of the pack coolant pipe housing 70 so that the cooling port 500 (see Fig. 2) can pass therethrough. A second gasket 70G2 may further be located under the pack coolant pipe housing 70 to prevent leakage of coolant from the through holes 70H.

In order to realize the sealed structure of the pack coolant pipe assembly, in this comparative example, two parts of the pack coolant pipe housing 70 and the pack coolant pipe cover 70C are required, whereas in the present embodiment, one pack coolant pipe housing 700 having an opened lower part can be used. That is, by using the pack frame 1100 in the formation of the sealing structure of the pack coolant pipe assembly, the number of parts required for the coolant leak prevention structure can be reduced. In addition, in this comparative example, the gasket for sealing also requires two gaskets 70G1 and 70G2, whereas in the present embodiment, one gasket 700G is sufficient.

Because the number of parts such as housings and gaskets are reduced, in the present embodiment, weight can be reduced and costs can be reduced. Further, since the pack coolant pipe cover 70C does not exist, it has an advantage that the space occupied by the pack coolant pipe cover 70C can be utilized as another space.

Furter, in this comparative example, as the number of gaskets increased, the assembling positions of the two gaskets 70G1 and 70G2 must be finely set in the process of connecting each part, so that the manufacturing process is complicated. Further, the increase in the region where the gaskets 70G1 and 70G2 are required means that, in other words, the region where the coolant leaks can occur increases, and may mean that the risk of coolant leakage increases. Therefore, the battery pack 1000 having the pack coolant pipe housing 700 according to the present embodiment has advantages in that the manufacturing process is simplified and the risk of coolant leakage is reduced, as compared to the comparative example.

Meanwhile, at least a portion of the housing part 710 of the pack coolant pipe housing 700 according to the present embodiment may come into direct contact with the adjacent battery module 100. As at least a portion of the housing part 710 in which the pack coolant pipe assembly 600 is housed comes into contact with the battery module 100, the cooling performance of the battery module 100 can be improved.

The terms representing directions such as the front side, the rear side, the left side, the right side, the upper side, and the lower side have been used in the present embodiment, but the terms used are provided simply for convenience of description and may become different according to the position of an object, the position of an observer, or the like.

One or more battery modules according to the present embodiment described above can be mounted together with various control and protection systems such as BMS (battery management system), an BDU (battery disconnect unit) and a cooling system to form a battery pack.

The battery pack can be applied to various devices. Specifically, it can be applied to vehicle means such as an electric bike, an electric vehicle, and a hybrid electric vehicle, or ESS (Energy Storage System), but is not limited thereto and can be applied to various devices capable of using a secondary battery.

Although preferred embodiments of the present disclosure have been shown and described above, the scope of the present disclosure is not limited thereto. The invention is defined solely by the scope of the appended claims.

### [Description of Reference Numerals]

1000: battery pack
100: battery module
200: module frame
300: heat sink
500: cooling port
600: pack coolant pipe assembly
700: pack coolant pipe housing
710: housing part
720: fastening part

## Claims

1. A battery pack (1000) comprising:
a battery module (100) including a plurality of battery cells (110);
a pack frame (1100) that houses the battery module (100);
a pack coolant pipe assembly (600) that is connected to the battery module (100); and
a pack coolant pipe housing (700) that houses the pack coolant pipe assembly (600) therein,
wherein the pack coolant pipe housing (700) is in a shape where a lower part is opened, and
wherein the pack coolant pipe assembly (600) is located between the pack coolant pipe housing (700) and the pack frame (1100),
**characterized in that** the pack coolant pipe housing (700) comprises a housing part (710) in which the pack coolant pipe assembly (600) is housed and the lower part is opened, and a fastening part (720) that extends from the housing part (710) and is fastened to the pack frame (1100), and that
a gasket (700G) is located between the fastening part (720) and the pack frame (1100) for preventing the coolant from leaking though a gap between the fastening part (720) of the pack coolant pipe housing and the pack frame (1100).

2. The battery pack (1000) according to claim 1, wherein:
the fastening part (720) is fastened to the pack frame (1100) by bolt joining.

3. The battery pack (1000) according to claim 1, wherein:
the battery module (100) comprises,
a battery cell stack (120) in which the battery cells (110) are stacked;
a module frame (200) that houses the battery cell stack (120);
a heat sink (300) that is located under the bottom part of the module frame (200); and
cooling ports (500) that supply a coolant to the heat sink (300) or discharge the coolant from the heat sink (300).

4. The battery pack (1000) according to claim 3, wherein:
the module frame (200) comprises a module frame protrusion (211) that protrudes from the bottom part of the module frame (200),
the cooling port (500) is located on the module frame protrusion (211); and
the pack coolant pipe assembly (600) is connected to the cooling port (500).

5. The battery pack (1000) according to claim 4, wherein:
the battery module (100) comprises a first battery module (100a) and a second battery module (100b),
the module frame protrusion (211) of the first battery module (100a) protrudes toward the second battery module (100b), and
the module frame protrusion (211) of the second battery module (100b) protrudes toward the first battery module (100a).

6. The battery pack (1000) according to claim 5, wherein:
the pack coolant pipe assembly (600) and the pack coolant pipe housing (700) are located between the first battery module (100a) and the second battery module (100b), and
the pack coolant pipe assembly (600) is connected to the cooling port (500) through the opened lower part of the pack coolant pipe housing (700).

7. The battery pack (1000) according to claim 3, wherein:
the bottom part of the module frame (200) constitutes an upper plate of the heat sink (300), and
the bottom part of the module frame (200) comes into contact with the coolant.

8. The battery pack (1000) according to claim 3, wherein:
the pack coolant pipe assembly (600) comprises a pack coolant pipe (610) and a connection port (620) that connects the pack coolant pipe (610) and the cooling port (500).

9. The battery pack (1000) according to claim 10, wherein:
the cooling port (500) is inserted therein and coupled to the lower side of the connection port (620), and
a sealing member (630) is located between the cooling port (500) and the connection port (620).

10. The battery pack (1000) according to claim 1, further comprising:
a drain valve (800) that is formed in a region covered by the pack coolant pipe housing (700) and has an openable and closable structure.

11. The battery pack (1000) according to claim 10, wherein:
the drain valve (800) comprises a spacer (810) in which a connection pipe (811) is formed, and a drain plug (820) inserted into the connection pipe (811).

12. The battery pack (1000) according to claim 1, further comprising:
a leak detection sensor (900) that is housed in the pack coolant pipe housing (700).

13. A device comprising the battery pack (1000) as set forth in claim 1.

## Patentansprüche

1. Batteriepack (1000), umfassend:
ein Batteriemodul (100), welches eine Mehrzahl von Batteriezellen (110) umfasst;
einen Packrahmen (1100), welcher das Batteriemodul (100) aufnimmt;
eine Packkühlmittelrohranordnung (600), welche mit dem Batteriemodul (100) verbunden ist; und
ein Packkühlmittelrohrgehäuse (700), welches die Packkühlmittelrohranordnung (600) darin aufnimmt,
wobei das Packkühlmittelrohrgehäuse (700) in einer Form vorliegt, in welcher ein unterer Teil geöffnet ist, und
wobei die Packkühlmittelrohranordnung (600) zwischen dem Packkühlmittelrohrgehäuse (700) und dem Packrahmen (1100) positioniert ist,
**dadurch gekennzeichnet, dass** das Packkühlmittelrohrgehäuse (700) einen Gehäuseteil (710), in welchem die Packkühlmittelrohranordnung (600) aufgenommen ist und der untere Teil geöffnet ist, und einen Befestigungsteil (720) umfasst, welcher sich von dem Gehäuseteil (710) erstreckt und an dem Packrahmen (1100) befestigt ist, und dass
eine Dichtung (700G) zwischen dem Befestigungsteil (720) und dem Packrahmen (1100) positioniert ist, um zu verhindern, dass das Kühlmittel durch einen Spalt zwischen dem Befestigungsteil (720) des Packkühlmittelrohrgehäuses und dem Packrahmen (1100) entweicht.

2. Batteriepack (1000) nach Anspruch 1, wobei:
der Befestigungsteil (720) durch eine Bolzenverbindung an dem Packrahmen (1100) befestigt ist.

3. Batteriepack (1000) nach Anspruch 1, wobei:
das Batteriemodul (100) umfasst:
einen Batteriezellenstapel (120), in welchem die Batteriezellen (110) gestapelt sind;
einen Modulrahmen (200), welcher den Batteriezellenstapel (120) aufnimmt;
einen Kühlkörper (300), welcher unter dem unteren Teil des Modulrahmens (200) positioniert ist; und
Kühlanschlüsse (500), welche dem Kühlkörper (300) ein Kühlmittel zuführen oder das Kühlmittel von dem Kühlkörper (300) abführen.

4. Batteriepack (1000) nach Anspruch 3, wobei:
der Modulrahmen (200) einen Modulrahmenvorsprung (211) umfasst, welcher von dem unteren Teil des Modulrahmens (200) vorsteht,
der Kühlanschluss (500) an dem Modulrahmenvorsprung (211) positioniert ist; und
die Packkühlmittelrohranordnung (600) mit dem Kühlanschluss (500) verbunden ist.

5. Batteriepack (1000) nach Anspruch 4, wobei:
das Batteriemodul (100) ein erstes Batteriemodul (100a) und ein zweites Batteriemodul (100b) umfasst,
der Modulrahmenvorsprung (211) des ersten Batteriemoduls (100a) in Richtung des zweiten Batteriemoduls (100b) vorsteht und
der Modulrahmenvorsprung (211) des zweiten Batteriemoduls (100b) in Richtung des ersten Batteriemoduls (100a) vorsteht.

6. Batteriepack (1000) nach Anspruch 5, wobei:
die Packkühlmittelrohranordnung (600) und das Packkühlmittelrohrgehäuse (700) zwischen dem ersten Batteriemodul (100a) und dem zweiten Batteriemodul (100b) positioniert sind und
die Packkühlmittelrohranordnung (600) durch den geöffneten unteren Teil des Packkühlmittelrohrgehäuses (700) mit dem Kühlanschluss (500) verbunden ist.

7. Batteriepack (1000) nach Anspruch 3, wobei:
der untere Teil des Modulrahmens (200) eine obere Platte des Kühlkörpers (300) ausmacht und
der untere Teil des Modulrahmens (200) mit dem Kühlmittel in Kontakt gelangt.

8. Batteriepack (1000) nach Anspruch 3, wobei:
die Packkühlmittelrohranordnung (600) ein Packkühlmittelrohr (610) und einen Verbindungsanschluss (620) umfasst, welcher das Packkühlmittelrohr (610) und den Kühlanschluss (500) verbindet.

9. Batteriepack (1000) nach Anspruch 10, wobei:
der Kühlanschluss (500) darin eingesetzt ist und mit der unteren Seite des Verbindungsanschlusses (620) gekoppelt ist und
ein Dichtelement (630) zwischen dem Kühlanschluss (500) und dem Verbindungsanschluss (620) positioniert ist.

10. Batteriepack (1000) nach Anspruch 1, ferner umfassend:
ein Ablassventil (800), welches in einem Bereich gebildet ist, welcher durch das Packkühlmittelrohrgehäuse (700) abgedeckt ist, und eine öffnungsfähige und schließbare Struktur aufweist.

11. Batteriepack (1000) nach Anspruch 10, wobei:
das Ablassventil (800) einen Abstandshalter (810), in welchem ein Verbindungsrohr (811) gebildet ist, und einen Ablassstopfen (820) umfasst, welcher in das Verbindungsrohr (811) eingesetzt ist.

12. Batteriepack (1000) nach Anspruch 1, ferner umfassend:
einen Leckagedetektionssensor (900), welcher in dem Packkühlmittelrohrgehäuse (700) aufgenommen ist.

13. Vorrichtung, umfassend den wie in Anspruch 1 dargelegten Batteriepack (1000).

## Revendications

1. Bloc-batterie (1000) comprenant :
un module de batterie (100) comprenant une pluralité d'éléments de batterie (110) ;
un cadre de bloc (1100) qui abrite le module de batterie (100) ;
un ensemble de tuyau de fluide de refroidissement de bloc (600) qui est relié au module de batterie (100) ; et
un boîtier de tuyau de fluide de refroidissement de bloc (700) qui abrite l'ensemble de tuyau de fluide de refroidissement de bloc (600) dans celui-ci,
dans lequel le boîtier de tuyau de fluide de refroidissement de bloc (700) a une forme où une partie inférieure est ouverte, et
dans lequel l'ensemble de tuyau de fluide de refroidissement de bloc (600) est situé entre le boîtier de tuyau de fluide de refroidissement de bloc (700) et le cadre de bloc (1100),
**caractérisé en ce que** le boîtier de tuyau de fluide de refroidissement de bloc (700) comprend une partie de boîtier (710) dans laquelle l'ensemble de tuyau de fluide de refroidissement de bloc (600) est abrité et la partie inférieure est ouverte, et une partie de fixation (720) qui s'étend à partir de la partie de boîtier (710) et est fixée au cadre de bloc (1100), et ce que
un joint (700G) est situé entre la partie de fixation (720) et le cadre de bloc (1100) pour empêcher le fluide de refroidissement de fuir par un interstice entre la partie de fixation (720) du boîtier de tuyau de fluide de refroidissement de bloc et le cadre de bloc (1100).

2. Bloc-batterie (1000) selon la revendication 1, dans lequel :
la partie de fixation (720) est fixée au cadre de bloc (1100) par un assemblage par boulon.

3. Bloc-batterie (1000) selon la revendication 1, dans lequel :
le module de batterie (100) comprend,
un empilement d'éléments de batterie (120) dans lequel les éléments de batterie (110) sont empilés ;
un cadre de module (200) qui abrite l'empilement d'éléments de batterie (120) ;
un dissipateur de chaleur (300) qui est situé sous la partie de dessous du cadre de module (200) ; et
des orifices de refroidissement (500) qui fournissent un fluide de refroidissement au dissipateur de chaleur (300) ou évacuent le fluide de refroidissement du dissipateur de chaleur (300).

4. Bloc-batterie (1000) selon la revendication 3, dans lequel :
le cadre de module (200) comprend une saillie de cadre de module (211) qui fait saillie à partir de la partie de dessous du cadre de module (200),
l'orifice de refroidissement (500) est situé sur la saillie de cadre de module (211) ; et
l'ensemble de tuyau de fluide de refroidissement de bloc (600) est relié à l'orifice de refroidissement (500).

5. Bloc-batterie (1000) selon la revendication 4, dans lequel :
le module de batterie (100) comprend un premier module de batterie (100a) et un second module de batterie (100b),
la saillie de cadre de module (211) du premier module de batterie (100a) fait saillie vers le second module de batterie (100b), et
la saillie de cadre de module (211) du second module de batterie (100b) fait saillie vers le premier module de batterie (100a).

6. Bloc-batterie (1000) selon la revendication 5, dans lequel :
l'ensemble de tuyau de fluide de refroidissement de bloc (600) et le boîtier de tuyau de fluide de refroidissement de bloc (700) sont situés entre le premier module de batterie (100a) et le second module de batterie (100b), et
l'ensemble de tuyau de fluide de refroidissement de bloc (600) est relié à l'orifice de refroidissement (500) par l'intermédiaire de la partie inférieure ouverte du boîtier de tuyau de fluide de refroidissement de bloc (700).

7. Bloc-batterie (1000) selon la revendication 3, dans lequel :
la partie de dessous du cadre de module (200) constitue une plaque supérieure du dissipateur de chaleur (300), et
la partie de dessous du cadre de module (200) entre en contact avec le fluide de refroidissement.

8. Bloc-batterie (1000) selon la revendication 3, dans lequel :
l'ensemble de tuyau de fluide de refroidissement de bloc (600) comprend un tuyau de fluide de refroidissement de bloc (610) et un orifice de liaison (620) qui relie le tuyau de fluide de refroidissement de bloc (610) et l'orifice de refroidissement (500).

9. Bloc-batterie (1000) selon la revendication 10, dans lequel :
l'orifice de refroidissement (500) est inséré dans celui-ci et accouplé au côté inférieur de l'orifice de liaison (620), et
un élément d'étanchéité (630) est situé entre l'orifice de refroidissement (500) et l'orifice de liaison (620).

10. Bloc-batterie (1000) selon la revendication 1, comprenant en outre :
une vanne de vidange (800) qui est formée dans une région couverte par le boîtier de tuyau de fluide de refroidissement de bloc (700) et a une structure ouvrable et fermable.

11. Bloc-batterie (1000) selon la revendication 10, dans lequel :
la vanne de vidange (800) comprend une entretoise (810) dans laquelle un tuyau de liaison (811) est formé, et un bouchon de vidange (820) inséré dans le tuyau de liaison (811).

12. Bloc-batterie (1000) selon la revendication 1, comprenant en outre :
un capteur de détection de fuite (900) qui est abrité dans le boîtier de tuyau de fluide de refroidissement de bloc (700).

13. Dispositif comprenant le bloc-batterie (1000) selon la revendication 1.
